Europäisches Patentamt

European Patent Office

Office européen des brevets

(19)

(11) Publication number: **0 009 418**
**A2**

(12)    EUROPEAN  PATENT  APPLICATION

(21) Application number: 79302011.6

(22) Date of filing: 26.09.79

(51) Int. Cl.³: **C 03 C  3/04,** C 03 C  3/08,
C 03 C  13/00

(30) Priority: 27.09.78  FI 782941

(71) Applicant: Oy Partek Ab., SF-21600 Parainen (FI)

(43) Date of publication of application: 02.04.80
Bulletin 80/7

(72) Inventor: Heikkinen, Leo Valio, Nissilänpiha 3,
SF-04200 Kerava (FI)
Inventor: Larsson, Lars Johan, Brokulla B 8, SF-21600
Parainen (FI)

(84) Designated Contracting States: BE CH DE FR GB IT NL
SE

(74) Representative: Dayneswood, Trevor et al, ABEL &
IMRAY Northumberland House 303-306 High Holborn,
London, WC1V 7LH (GB)

(54)  Glass composition for the production of fibres.

(57)  Glass fibres can be produced from molten glass com-
positions by various fibrisation processes, but each
process requires a specifically developed glass composi-
tion in order to optimise the amount of wastage, the ex-
pense of the composition, the fluidity and crystallisation
tendency of the melt, and the quality (heavy-weight or
light-weight) and hydrolytic resistance of the glass fibre
product. For example, the process giving a light-weight
product in a high yield requires an expensive composition
that cannot readily utilise industrial wastes. The glass
composition of the invention is suitable for several
processes and can utilise industrial wastes while giving a
light-weight good quality product. The amounts of all
components of the composition are maintained within
specified ranges and the weight ratios CaO : $Na_2O$, $SiO_2$ :
$Al_2O_3$, $K_2O$ : $Na_2O$ and $(CaO/Na_2O)$ : $(SiO_2/Al_2O_3)$ are also
maintained within given ranges.

OY PARTEK AB.                    Case TD/JB/22766

"Glass composition for the production
of fibres"

The present invention relates to a glass composition
for the production of fibres.

The term "glass composition" as used herein means a
composition or mixture of components - whether in the solid
state or the liquid state - that is suitable for the manufacture of glass, that is to say a composition that can be
solidified from the melt under suitable conditions to produce glass.  Many different materials and mixtures of
materials can be used to manufacture glass but the ease with
which the manufacturing process can be carried out and the
quality of the glass so produced depend largely on the particular glass composition used.

Several processes have been proposed and/or are used
for converting molten glass compositions into glass fibres.
Some of these fiberisation processes give better quality
products than do other of the processes but the poorer
quality products are quite suitable for certain purposes.
Moreover, some of the processes can use readily available
inexpensive starting materials, whereas other of the processes require more expensive starting materials.  Several
fiberisation processes that have been or are used are summarised by J. Gilbert Mohr and William Rowe, "Fiber Glass",
Van Nostrand Reinhold Company, New York, 1978.  Three of
the commonly used processes are the rock-wool process, the
rotary process (also known as the glass-wool process), and
the flame-attenuation process (also known as the glass-
drawing process).

In one variant of the rock-wool process, molten
glass composition is fed onto one or more discs rotating with a high peripheral speed and the melt is flung by centrifugal force into a suitably directed and controlled air stream, where it forms into fibres and cools. The fibres are carried by the air flow and collected at a suitable point for further treatment. Other variants of the rock-wool process are the steam-blown process and the spinning process (see Mohr and Rowe, pp. 9 and 11).

A major disadvantage of the rock-wool process in general is that only about 40 - 45% of the glass melt is actually converted into fibres. Up to about 25% of the melt collects as waste, for example by being flung directly into a waste chamber below the disc(s), and the remainder forms into shot of various sizes. The product of this process thus contains up to about 40% of shot and is therefore primarily suitable for further processing into heavy-weight fibre products, such as those products generally known as rock wool, mineral wool or slag wool. This process cannot economically be used for the production of shot-free light-weight fibre products, such as the product commonly known as "glass wool". (In this respect it should be noted that although such a light-weight shot-free product is commonly known as "glass wool", this term is strictly a generic term referring to a mat or felt of glass fibres and includes products such as rock wool, mineral wool and slag wool mentioned above.) An important advantage of the rock-wool process, however, is that it can utilise inexpensive starting materials, for example fly ash and various slags.

In the rotary process (also known as the glass-wool process), molten glass composition is fed into a hollow wheel-like cylinder rotating at high speed. Centrifugal force causes the melt to break up and be exuded horizontally through holes in the vertical circumferential sidewall of the cylinder or wheel, thus forming so-called primary fibres. These primary fibres are then further attenuated downward by the action of a suitably controlled flame or gas stream, thus forming the final glass fibres.

This process has the advantages that the efficiency of the centrifugation is nearly 100%, and the yield of glass fibres corresponds to about 95% of the quantity of melt used. Another advantage of this process is that the product is generally more light-weight than those of the other processes, and the glass fibres obtained by this process are suitable for further processing into the product commonly known as "glass wool". Disadvantages of this process are that it is complicated and uneconomical, and, as regards total cost, it is more expensive than the rock-wool process per unit weight of the product. This is largely because it requires more expensive starting materials than does the rock-wool process, and because it requires a particular melting method.

In the flame-attenuation or glass-drawing process, primary filaments of molten glass are fed into a directed and controlled stream of gas or steam or into a jet flame from a burner or blower pipe system. Thinning, lengthening and division of the filaments into fibres takes place in the flame or the stream of gas or steam. This process is, however, slow and requires a high energy expenditure. Moreover, the distribution of fibre diameters is generally greater than in the other processes, although this process can be used to produce particularly fine fibres. This process is not used to a very great extent.

One parameter that has an important influence on the quality of the product in all the processes is the fluidity of the molten glass composition at the particular fibrising temperature being used, and the viscosity of the melt is generally used as a measure of the fluidity. In general, the lower is the viscosity of the molten glass composition at a given temperature, the more suitable is the composition for fibrising at that temperature. This, coupled with other factors such as those discussed above, has necessitated the development of particular glass compositions for each process.

In particular, as discussed above, the glass compositions developed for the rock-wool process permit the use of fly ash and slags as starting materials, whereas it has not proved possible to utilise such industrial waste material in the rotary process because the melt would not have properties concomitant with carrying out this process economically or, in some cases, even at all.

An example of a glass composition that has been developed especially for the rotary process and is used in that process is the following composition (percentages are by weight):

| | |
|---|---|
| $SiO_2$ | 59.0% |
| $Al_2O_3$ | 3.4% |
| $Fe_2O_3$ | 0.1% |
| MgO | 5.0% |
| CaO | 8.2% |
| $Na_2O$ | 16.0% |
| $K_2O$ | 1.3% |
| $B_2O_3$ | 7.0% |
| | 100.0% |

This composition is generally considered fairly expensive, particularly because of the relatively large proportions of the expensive compounds $Na_2O$ and $B_2O_3$.

It can be seen that it would be advantageous to develop a glass composition that permits the use of industrial wastes and yet is suitable for use in the rotary process and gives fibres of a quality comparable to that of fibres produced from compositions currently used in the rotary process. That is to say, it would be advantageous to be able to combine advantages of the rotary process with those of the rock-wool process. Moreover, it would be advantageous to develop a glass composition suitable for use in any of the mentioned fibrising processes.

The present invention provides a glass composition for the production of fibres comprising the following components in amounts within the respective given ranges (percentages are by weight):

| | |
|---|---|
| $SiO_2$ | 47 to 58% |
| $Al_2O_3$ | 3 to 12% |
| $Fe_2O_3$ | 0 to 4% |
| FeO | 0 to 4% |
| MgO | 1 to 6% |
| CaO | 12 to 22% |
| $Na_2O$ | 7 to 16% |
| $K_2O$ | 0 to 5% |
| $B_2O_3$ | 0 to 10% |
| $TiO_2$ | 0 to 4% |
| MnO | 0 to 4% |
| BaO | 0 to 3% |
| $P_2O_5$ | 0 to 4% |
| $SO_3$ | 0 to 1% |
| F | 0 to 1% |

characterised in that the amounts of CaO, $Na_2O$, $SiO_2$, $Al_2O_3$ and $K_2O$ are such that the following weight ratios are within the respective given ranges:

| | | | | |
|---|---|---|---|---|
| CaO | : | $Na_2O$ | 0.8 : 1 | to 1.8 : 1 |
| $SiO_2$ | : | $Al_2O_3$ | 3.9 : 1 | to 8.8 : 1 |
| $K_2O$ | : | $Na_2O$ | 0 | to 0.7 : 1 |
| $(CaO/Na_2O)$ | : | $(SiO_2/Al_2O_3)$ | 0.1 : 1 | to 0.5 : 1. |

This glass composition is suitable for use in any of the above-mentioned fibrising processes, especially the rotary or glass-wool process. The composition can utilise industrial wastes, for example fly ash, blast-furnace slag, soda-furnace slag and Thomas slag. Moreover, provided that the $K_2O$ : $Na_2O$ ratio and other specified ratios are maintained within the specified ranges, this composition permits the use of low proportions of $Na_2O$ and $B_2O_3$. This is especially important as regards the borax ($B_2O_3$) or other boron source, because the availability of boron is limited and it will probably become more difficult to obtain and more expensive.

It has been found that the viscosity of a molten glass composition and the crystallisation tendency or degree of crystallisation (which should be as low as possible) of the melt as it solidifies depend largely on the $K_2O$ : $Na_2O$

ratio, the CaO : $Na_2O$ ratio, the $SiO_2$ : $Al_2O_3$ ratio, and the (CaO/$Na_2O$) : ($SiO_2$ / $Al_2O_3$) ratio, and that by maintaining these ratios within the specified ranges optimum viscosities and crystallisation tendencies can be achieved. Moreover, by varying these ratios within the given ranges and/or by varying the amounts of the various components, these properties may be optimised and regulated to suit the individual fibrising processes.

Yet in all cases, the glass composition according to the invention can utilise industrial wastes such as those mentioned above and thus the glass composition according to the invention is inexpensive and, in particular, is less expensive than compositions previously developed for the rotary process. Moreover, energy expenditure required in melting and preparing the glass composition according to the invention is considerably less than that required with many known glass compositions because of the low annealing losses of the raw materials (that is, largely the industrial wastes) and because these raw materials have already been smelted and oxidised in the processes from which they are waste products.

The following table indicates the viscosity of a typical glass composition according to the invention at various temperatures and compares these values with those for known glass compositions:

| Glass composition | Viscosity of glass composition ($\log \eta$ – dPa.s) at | | | | |
|---|---|---|---|---|---|
| | 1400°C | 1300°C | 1200°C | 1100°C | 1000°C |
| Typical composition for rotary process | 1.46 | 1.77 | 2.16 | 2.64 | 3.28 |
| Typical composition for rock-wool process | 1.26 | 1.62 | CRYSTALLIZATION | | |
| Typical composition for glass-drawing process | – | 2.02 | 2.48 | 3.08 | 3.93 |
| Typical composition according to the invention | 1.38 | 1.70 | 2.11 | 2.60 | 3.33 |

In order for fibrisation to take place without difficulty, the temperature corresponding to log $\eta$ = 3.0 (where $\eta$ is the viscosity in decipascal.seconds (dPa.s)) should not exceed 1060°C, otherwise the glass melt may not maintain the requisite fluidity long enough for fibrisation to take place readily or, in other words, the life-time of the fibriser may be insufficient.

It is important that the degree of crystallisation occurring on solidification of the glass composition should be maintained as low as possible because a high degree of crystallisation has an adverse effect on the strength properties of the resulting glass. Moreover, the crystallisation tendency must also be kept low because the occurrence of crystallisation within the centrifugal wheel, in the rotary process, again shortens the life-time of the fibriser. To this end, the crystallisation temperature or liquidus point ($L_T$) should preferably be low.

In order to achieve the desired regulation of the crystallisation tendency, it is desirable that the ratio CaO : $Na_2O$ should be low while the ratio $K_2O$ : $Na_2O$ should be high. Thus, for example, a high CaO content may be disadvantageous as this tends to increase the crystallisation temperature but, notwithstanding a high CaO content, if the rate of crystallisation is sufficiently low the desired low degree of crystallisation may still be achieved.

The requirement for a high ratio $K_2O$ : $Na_2O$ may necessitate having a high $K_2O$ content but this may be disadvantageous as it tends to decrease the hydrolytic resistance of the glass fibres produced from the glass composition. This can be corrected, however, by the presence of other oxides, such as $Fe_2O_3$, $TiO_2$, $Al_2O_3$ and MnO, which improve the hydrolytic resistance, and slags containing such oxides may be used as a source for these oxides. Moreover, as well as permitting the proportions of $K_2O$ and $Na_2O$ to be raised, the presence of high amounts of oxides that improve the hydrolytic resistance of the product also permits the proportion of $B_2O_3$ to be lowered without an adverse effect on the hydrolytic resistance and, as discussed previously, it is advantageous to have a low content of $B_2O_3$.

In fact, it is an advantage of the glass compositions according to the invention that glass fibres produced therefrom generally have an improved hydrolytic resistance as compared with those produced from known glass compositions. The hydrolytic resistance of glass fibres can be measured according to SIS (Swedish Industrial Standard) 13 63 21, in which the amount of alkali dissolved out of ground glass pulp in water at $28^{\circ}C$ is measured by determining the consumption of 0.01 N HCl required to neutralise the alkali. The hydrolytic resistance of known glass fibres, as determined by this method, is generally from 1.0 to 1.5 ml 0.01 N HCl, whereas the hydrolytic resistance of glass fibres produced from the glass composition according to the invention is generally from 0.6 to 1.2 ml 0.01 N HCl.

The following Examples 1 to 3 illustrate glass compositions according to the invention. All parts, percentages and ratios given in the examples are calculated by weight.

Example 1

A glass composition was prepared from:

1 part of burnt lime,
0.5 part of blast-furnace slag,
1.7 parts of fly ash,
2 parts of silica sand,
1.2 parts of sodium hydroxide,
0.4 part of rasorite,
0.4 part of feldspar and
1.0 part of mill scale.

The resulting composition was as follows:

0009418

| | | |
|---|---|---|
| $SiO_2$ | 50.7% | |
| $Al_2O_3$ | 7.8% | |
| FeO | 3.5% | |
| MgO | 2.3% | |
| CaO | 18.9% | |
| $Na_2O$ | 12.6% | |
| $K_2O$ | 1.0% | |
| $B_2O_3$ | 2.6% | |
| $TiO_2$ | 0.6% | |
| | 100.0% | |

with the following ratios:

| | | |
|---|---|---|
| CaO : $Na_2O$ | 1.5 | : 1 |
| $SiO_2$ : $Al_2O_3$ | 6.5 | : 1 |
| $K_2O$ : $Na_2O$ | 0.08 | : 1 |
| $(CaO/Na_2O)$ : $(SiO_2/Al_2O_3)$ | 0.23 | : 1 |

In this composition, the ratio $(CaO/Na_2O)$: $(SiO_2/Al_2O_3)$ is sufficiently large and the ratio $SiO_2$ : $Al_2O_3$ is sufficiently small to give a composition having a viscosity of a suitable value to enable fibrisation to take place readily while giving a product having good hydrolytic resistance.

The composition has the following viscosity values $\eta$ (dPa.s):

$$\log \eta = 2.0 \text{ at } 1228^{\circ}C$$
$$\log \eta = 3.0 \text{ at } 1046^{\circ}C$$

It can be seen from these values that the desideratum of the temperature corresponding to $\log \eta = 3.0$ not exceeding $1060^{\circ}C$ is satisfied.

Glass fibres produced from this composition have properties similar to those produced from known glass compositions in the corresponding processes. For example, when this composition is used for fibrising according to the rotary process, the properties of the resulting glass wool are similar to those of glass wool produced by this process from known glass compositions.

The hydrolytic resistance (Pv) of glass fibres produced from this composition was found to be 1.1 ml 0.01 N HCl, as determined according to SIS 13 63 21.

It has been found that, despite the high CaO content in this composition, no crystallisation could be observed in the glass fibres by either optic or X-ray means because the rate of crystallisation in the fibrising zone is low. Consequently, the high CaO content with the resultant high crystallisation temperature, does not have an adverse effect on the strength of the glass fibres produced from this composition.

Example 2

The following glass composition was prepared:

| | |
|---|---|
| $SiO_2$ | 49.3% |
| $Al_2O_3$ | 5.8% |
| $Fe_2O_3$ | 3.3% |
| MgO | 2.6% |
| CaO | 13.2% |
| $Na_2O$ | 11.0% |
| $K_2O$ | 4.1% |
| $B_2O_3$ | 6.5% |
| MnO | 2.2% |
| $TiO_2$ | 2.0% |
| | 100.0% |

in which the following ratios have the given values:

| | | | | |
|---|---|---|---|---|
| CaO | : | $Na_2O$ | 1.2 | : 1 |
| $SiO_2$ | : | $Al_2O_3$ | 8.5 | : 1 |
| $K_2O$ | : | $Na_2O$ | 0.37 | : 1 |
| $(CaO/Na_2O)$ | : | $(SiO_2/Al_2O_3)$ | 0.14 | : 1 |

This composition had the following properties:

Viscosity $\eta$ (dPa.s):

$\log \eta = 2.0$ at $1212^\circ C$

$\log \eta = 3.0$ at $1008^\circ C$

Crystallisation temperature
(liquidus point) $(L_T)$ : $995^\circ C$

Hydrolytic resistance (PV) of glass fibres:
1.2 ml 0.01 N HCl (SIS 13 63 21).

In this composition, a low crystallisation temperature is obtained by using a low ratio CaO : $Na_2O$ and a high ratio $K_2O$ : $Na_2O$, but the decreased hydrolytic resistance that might result from a high content of $K_2O$ is counteracted by the presence of MnO and $TiO_2$.

Example 3

The following glass composition was prepared:

| | |
|---|---|
| $SiO_2$ | 47.0% |
| $Al_2O_3$ | 8.7% |
| $Fe_2O_3$ | 4.0% |
| MgO | 1.4% |
| CaO | 14.6% |
| $Na_2O$ | 12.2% |
| $K_2O$ | 5.0% |
| $B_2O_3$ | 1.2% |
| $TiO_2$ | 2.3% |
| MnO | 3.6% |
| | 100.0% |

in which the following ratios have the given values:

| | | | | | |
|---|---|---|---|---|---|
| CaO | : | $Na_2O$ | 1.2 | : | 1 |
| $SiO_2$ | : | $Al_2O_3$ | 5.4 | : | 1 |
| $K_2O$ | : | $Na_2O$ | 0.41 | : | 1 |
| $(CaO/Na_2O)$ | : | $(SiO_2/Al_2O_3)$ | 0.22 | : | 1 |

This composition had the following properties:

Viscosity $\eta$ (dPa.s):

$\log \eta$ = 2.0 at $1231^{\circ}C$

$\log \eta$ = 3.0 at $1024^{\circ}C$

Crystallisation temperature

(liquidus point) $(L_T)$ : $1044^{\circ}C$

Hydrolytic resistance (PV) of glass fibres:

0.90 ml 0.01 N HCl (SIS 13 63 21).

In this composition, the presence of oxides improving the hydrolytic resistance, such as $Fe_2O_3$, $TiO_2$ and $Al_2O_3$, permits the proportions of $K_2O$ and $Na_2O$ to be increased while having a low content of $B_2O_3$, without adversely affecting the hydrolytic resistance.

Claims

1. A glass composition for the production of fibres comprising the following components in amounts within the respective given ranges (percentages are by weight):

| | |
|---|---|
| $SiO_2$ | 47 to 58% |
| $Al_2O_3$ | 3 to 12% |
| $Fe_2O_3$ | 0 to 4% |
| FeO | 0 to 4% |
| MgO | 1 to 6% |
| CaO | 12 to 22% |
| $Na_2O$ | 7 to 16% |
| $K_2O$ | 0 to 5% |
| $B_2O_3$ | 0 to 10% |
| $TiO_2$ | 0 to 4% |
| MnO | 0 to 4% |
| BaO | 0 to 3% |
| $P_2O_5$ | 0 to 4% |
| $SO_3$ | 0 to 1% |
| F | 0 to 1% |

characterised in that the amounts of CaO, $Na_2O$, $SiO_2$, $Al_2O_3$ and $K_2O$ are such that the following weight ratios are within the respective given ranges:

| | | | | | | | | | |
|---|---|---|---|---|---|---|---|---|---|
| CaO | : | $Na_2O$ | | 0.8 | : | 1 | to | 1.8 | : 1 |
| $SiO_2$ | : | $Al_2O_3$ | | 3.9 | : | 1 | to | 8.8 | : 1 |
| $K_2O$ | : | $Na_2O$ | | | | 0 | to | 0.7 | : 1 |
| (CaO/$Na_2O$) | : | ($SiO_2$/$Al_2O_3$) | | 0.1 | : | 1 | to | 0.5 | : 1. |

2. A glass composition for the production of fibres characterised in that the following components are present in the respective given amounts (percentages are by weight):

| | |
|---|---|
| $SiO_2$ | 50.7% |
| $Al_2O_3$ | 7.8% |
| FeO | 3.5% |
| MgO | 2.3% |
| CaO | 18.9% |
| $Na_2O$ | 12.6% |
| $K_2O$ | 1.0% |
| $B_2O_3$ | 2.6% |
| $TiO_2$ | 0.6% |

3.     A glass composition for the production of fibres characterised in that the following components are present in the respective given amounts (percentages are by weight):

| | |
|---|---|
| $SiO_2$ | 49.3% |
| $Al_2O_3$ | 5.8% |
| $Fe_2O_3$ | 3.3% |
| MgO | 2.6% |
| CaO | 13.2% |
| $Na_2O$ | 11.0% |
| $K_2O$ | 4.1% |
| $B_2O_3$ | 6.5% |
| MnO | 2.2% |
| $TiO_2$ | 2.0% |

4.     A glass composition for the production of fibres characterised in that the following components are present in the respective given amounts (percentages are by weight):

| | |
|---|---|
| $SiO_2$ | 47.0% |
| $Al_2O_3$ | 8.7% |
| $Fe_2O_3$ | 4.0% |
| MgO | 1.4% |
| CaO | 14.6% |
| $Na_2O$ | 12.2% |
| $K_2O$ | 5.0% |
| $B_2O_3$ | 1.2% |
| $TiO_2$ | 2.3% |
| MnO | 3.6% |